(19) Europäisches Patentamt

European Patent Office

Office européen des brevets

(11) Veröffentlichungsnummer: **0 274 564**
**B1**

(12) **EUROPÄISCHE PATENTSCHRIFT**

(45) Veröffentlichungstag der Patentschrift:
27.06.90

(21) Anmeldenummer: 87110578.9

(22) Anmeldetag: **22.07.87**

(51) Int. Cl.⁵: **B09B 1/00, E02D 31/00**

(54) **Abdichtung für neu zu errichtende Deponien.**

(30) Priorität: **12.01.87 DE 3700645**

(43) Veröffentlichungstag der Anmeldung:
**20.07.88 Patentblatt 88/29**

(45) Bekanntmachung des Hinweises auf die Patenterteilung:
**27.06.90 Patentblatt 90/26**

(84) Benannte Vertragsstaaten:
**AT BE CH DE ES FR GB GR IT LI NL SE**

(56) Entgegenhaltungen:
EP-A- 0 157 398
DE-A- 3 444 895
US-A- 3 896 969
US-A- 4 048 373
US-A- 4 344 722
US-A- 4 565 468

(73) Patentinhaber: **Niederberg-Chemie GmbH,
Postfach 11 63, D-4133 Neukirchen-Vluyn(DE)**

(72) Erfinder: **Schlütter, Aloys, Rheinstrasse 42,
D-4152 Kempen 3(DE)**

ACTORUM AG

## Beschreibung

Die Erfindung betrifft eine Abdichtung für neu zu errichtende Deponien oder dergleichen, wobei die Bodenfläche vorzugsweise in Felder von 2500 bis 3000 m² unterteilt wird und eine doppellagige Kunststoffabdichtung vorgesehen ist. Die Unterteilung in Felder bewirkt das Entstehen abgeschotteter Räume, nachfolgend Schottfelder genannt. Die Schottfelder haben das Ziel, einen ggf. auftretenden Schaden an der Abdichtung zu begrenzen.

Die doppellagige Abdichtung dient einerseits der Sicherung der Abdichtung, andererseits dazu, eine lokalisierte Leckage abzudichten. Das erfolgt dann durch Einpressen von Dichtungsmitteln zwischen die beiden Abdichtungsbahnen eines Schottfeldes.

Nur ein Bruchteil aller denkbaren Leckagen wird durch plötzlich auftretende Beschädigungen größeren Ausmaßes verursacht. Die kleinen Leckagen sind relativ schwierig zu lokalisieren. Der Erfindung liegt die Aufgabe zugrunde, den kleinen Leckagen entgegenzuwirken.

Nach der Erfindung wird das dadurch erreicht, daß zwischen beiden Abdichtungslagen ein Geotextil vorgesehen ist und das Geotextil mit mineralischem Mehl abgestreut ist. Als mineralisches Mehl ist vorzugsweise Bentonit vorgesehen. Die Höhe der Abdeckung mit Bentonitmehl beträgt vorzugsweise mindestens 5 mm.

Das Geotextil stützt die darüberliegende Kunststofflage. Darüber hinaus bewirkt das Geotextil zusammen mit dem Bentonitmehl einen Selbstheilungseffekt; d.h. im Falle einer geringfügigen Leckage nicht nur der oberen Kunststofflage, sondern auch der unteren Kunststofflage, schwemmt das Bentonitmehl die geringe Öffnung in der unteren Kunststofflage zu.

Zwar ist aus der US-PS 4 565 468 bekannt, zur Abdichtung Bentonit zu verwenden, der zwischen zwei Bahnen gehalten ist. Diese Bahnen bilden jedoch keine Abdichtungsbahnen, so daß ein nicht vergleichbares System vorliegt.

Auch die US-PS 3 896 969 zeigt ein Abdichtungssystem. Im Falle eines Lecks werden Mikrokapseln vom durchdrängendem Wasser angelöst und aufgelöst, so daß deren Inhalt freigesetzt wird. Der Inhalt besteht entweder aus einem mit Wasser chemisch reagierenden Mittel oder aus verschiedenen Mitteln, die nach ihrem Freisetzen miteinander reagieren, insbesondere aushärten, um eine Abdichtung zu bilden.

Nach der Erfindung ist aber kein Reaktionsmittel, sondern nur ein einfaches mineralisches Mehl vorgesehen. Überraschenderweise wird das Mehl nicht durch entstehende Leckagen weggeschwemmt, vielmehr bewirkt es eine Verstopfung der Leckagen.

In der Zeichnung ist ein Ausführungsbeispiel der Erfindung dargestellt.

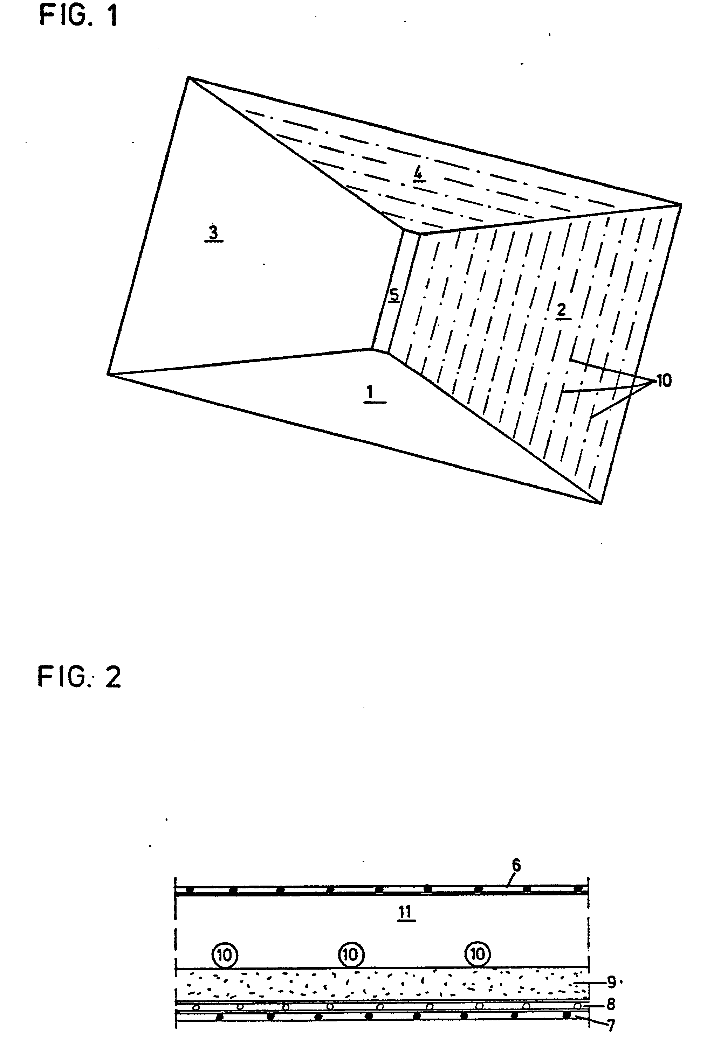

Figur 1 zeigt einen Deponieboden mit vier Schottfeldern 1, 2, 3 und 4. Die Schottfelder haben eine Größe von 2500 m². Die Schottfelder 1 bis 4 neigen sich alle einer Drainage 5 für anfallendes Sickerwasser zu. Die Drainage 5 besteht aus einem Rohr mit dem Querschnitt üblicher Abwasserrohre, welches an der Oberseite und an der Stirnseite Eintrittsöffnungen für das Sickerwasser aufweist. Das Rohr setzt sich dann in nicht dargestellter Weise zu einem Sammelschacht fort, wobei es außerhalb des Aufnahmebereiches von Sickerwasser geschlossen ist und dadurch ein unerwünschtes Abfließen von anfallendem Sickerwasser vermieden wird. Aus dem Sammelschaft wird das Sickerwasser einer Wasseraufbereitung zugeführt.

Jedes Schottfeld besitzt nach Figur 2 eine doppellagige Kunststoffabdichtung mit Kunststofflagen 6 und 7. Die Kunststofflagen setzen sich zusammen aus Abdichtungsbahnen von 2,5 m Breite, die sich über die gesamte Länge der Schottfelder 1 bis 4 erstrecken und an den Rändern einander überlappen und dort verschweißt sind. Als Material für die Kunststoffabdichtungsbahnen ist im Ausführungsbeispiel ein Hochdruckpolyäthylen vorgesehen. Die Dicke der Kunststoffbahn beträgt 2,5 mm.

Auf der Kunststofflage 7 liegt ein Glasfaservlies mit einem Flächengewicht von 500 g/m² auf. Das mit 8 bezeichnete Glasfaservlies ist mit Bentonitmehl 9 abgestreut. Die Schichtdicke der Bentonitschicht beträgt 1 cm. Auf dem Bentonitmehl liegen Rohre 10 einer Kontrolldrainage auf. Der übrige Raum zwischen der Betonitschicht 9 und der oberen Kunststofflage 6 ist mit Kies 11 gefüllt.

Die Kontrolldrainage hat die Aufgabe einer Leckanzeige. Sobald die obere Kunststofflage 6 beschäddigt ist und Wasser in die Rohre 10 der Kontrolldrainage, welche entsprechende Eintrittsöffnungen für Leckagewasser aufweisen, eintritt, fließt dieses Leckagewasser einer Sammelleitung zu. Jedes der Schottfelder 1 bis 4 ist mit einer separaten Sammelleitung versehen. Deshalb kann durch Prüfung der verschiedenen Sammelleitungen jede größere Leckage lokalisiert werden.

Kleinere Leckagen, die auch mit einer Verletzung der unteren Kunststofflage 7 verbunden sind, werden durch das Bentonitmehl wieder abgedichtet. Das geschieht durch Zuschwemmen der entstehenden kleinen Leckageöffnungen. Dadurch entsteht eine Kontaktdichtung mit Selbstheilungseffekt. Wahlweise ist der gesamte Zwischenraum zwischen den beiden Kunststofflagen auch mit Bentonitmehl ausgefüllt. Das verhindert eine Ausbreitung des Leckagewassers zwischen den Kunststofflagen. Versuche haben bestätigt, daß selbst bei 5 m Wassersäule die Durchfeuchtung der Bentonitschicht bei einem Leckagequerschnitt in der oberen Kunststofflage 6 von 1 cm² weniger als 1 m² beträgt.

Als Bentonitmehl eignet sich trockener Bentonit mit Körnung eines Bentonitschlammes. Auch weniger feinkörniger Bentonit kann verwendent werden. Wichtig ist das Kornspektrum. Im Ausführungsbeispiel entsprach die Körnung einer Mahlung mit 30 % kleiner 0,005 m.

Die Rohre der Kontrolldrainage können auch unterhalb der unteren Kunststofflage 7 angeordnet sein.

Nach Feststellung einer gravierenden Leckage können die Drainagerohre 10 auch zum Injizieren eines Dichtungsmittels, z. B. Kunststoffharz, verwendet werden.

## Patentansprüche

1. Abdichtung für neu zu errichtende Deponien oder dergleichen, wobei die Bodenfläche vorzugsweise in Felder von 2 500 bis 3 000 m² unterteilt wird und eine doppellagige Kunststoffabdichtung vorgesehen ist, **dadurch gekennzeichnet**, daß zwischen beiden Kunststofflagen (6, 7) ein Geotextil (8) vorgesehen ist, das mit einem mineralischen Mehl (9) abgestreut ist.

2. Abdichtung nach Anspruch 1, **dadurch gekennzeichnet**, daß das mineralische Mehl ein Bentonitmehl ist und eine Schichtdicke von mindestens 5 mm aufweist.

3. Abdichtung nach Anspruch 1 oder 2, **dadurch gekennzeichnet**, daß neben der Sickerwasserdrainage (5) eine Kontrolldrainage (10) vorgesehen ist.

4. Abdichtung nach Anspruch 3, **dadurch gekennzeichnet**, daß die Kontrolldrainage zwischen beiden Kunststofflagen. (6, 7) oder unter der unteren Kunststofflage (7) angeordnet ist.

## Claims

1. Impervious barrier for creating new waste disposal dumps or the like, wherein the ground area is divided, preferably, into bays of 2500 to 3000 m² and a double-layer plastics seal is provided, characterized in that, between the two plastics layers (6, 7), a geotextile (8) is provided, on which a mineral flour (9) is sprinkled.

2. Impervious barrier according to Claim 1, characterized in that the mineral flour is a bentonite flour and has a layer thickness of at least 5 mm.

3. Impervious barrier according to Claim 1 or 2, characterized in that, in addition to the precolating water drain (5), a monitoring drainage system (10) is provided.

4. Impervious barrier according to Claim 3, characterized in that the monitoring drainage system is disposed between the two plastics layers (6, 7) or beneath the lower plastics layer (7).

## Revendications

1. Revêtement étanche pour des nouvelles décharges publiques ou analogues à construire, pour lesquelles la superficie est de préférence divisée en champs de 2500 à 3000 m² et pour lesquelles il est prévu un revêtement étanche en matière synthétique en deux couches, caractérisé en ce qu'entre les deux couches (6, 7) de matière synthétique, il est prévu un textile pour sols (8) sur lequel est répandue une poudre minérale (9).

2. Revêtement étanche selon la revendications 1, caractérisé en ce que la poudre minérale est une poudre de bentonite et constitue une couche d'au moins 5 mm d'épaisseur.

3. Revêtement étanche selon l'une des revendications 1 ou 2, caractérisé en ce qu'il est prévu, à côté du système de drainage (5) des eaux d'infiltration, un système de drainage de contrôle (10).

4. Etanchement selon la revendication 3, caractérisé en ce que le système de drainage de contrôle est disposé entre les deux couches de matière synthétique (6, 7) ou sous la couche inférieure (7) de matière synthétique.

FIG. 1

FIG. 2